(19) Europäisches Patentamt European Patent Office Office européen des brevets

(11) **EP 4 759 782 A1**

(12) **EUROPEAN PATENT APPLICATION**

(43) Date of publication:
**17.06.2026 Bulletin 2026/25**

(21) Application number: **24219087.4**

(22) Date of filing: **11.12.2024**

(51) International Patent Classification (IPC):
**C04B 28/02** (2006.01)    **C04B 28/08** (2006.01)
**C04B 18/12** (2006.01)    **C04B 22/10** (2006.01)
**C04B 7/02** (2006.01)

(52) Cooperative Patent Classification (CPC):
(C-Sets available)
**C04B 28/02; C04B 18/12; C04B 22/103;**
**C04B 28/026; C04B 28/08;** C04B 2111/00019;
C04B 2111/00724                    (Cont.)

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(71) Applicant: **Blue Skies Minerals GmbH**
**12435 Berlin (DE)**

(72) Inventors:
• **Sobolewski, André**
  **12435 Berlin (DE)**
• **Barth, Silko**
  **12435 Berlin (DE)**

(74) Representative: **Ziebig Hengelhaupt Intellectual**
**Property Attorneys**
**Patentanwaltskanzlei PartGmbB**
**Leipziger Straße 49**
**10117 Berlin (DE)**

(54) **METHOD FOR BACKFILLING OF UNDERGROUND VOIDS USING MINERALIZED CO2 AND CEMENTITIOUS TAILINGS**

(57)    The presently claimed invention is directed to a process for the production of a cementitious paste for backfilling of underground operations, wherein the process comprises at least the steps of (1) providing carbon dioxide in an alkaline solution to form a medium containing at least one carbonate or providing carbon dioxide in the form of a concentrated carbon dioxide gas, and (2) mixing (a) at least one binder, (b) mine tailings, (c) the medium containing at least one carbonate of step (1) or the concentrated carbon dioxide gas, and (d) optionally at least one filler to obtain a cementitious paste.

**(Cont. next page)**

(52) Cooperative Patent Classification (CPC): (Cont.)

C-Sets
**C04B 28/02, C04B 18/12, C04B 18/141,
C04B 22/103, C04B 38/0074, C04B 40/0091;
C04B 28/026, C04B 18/12, C04B 22/064,
C04B 22/103, C04B 40/0091;
C04B 28/08, C04B 7/02, C04B 18/12,
C04B 22/103, C04B 40/0091**

**Description**

**Technical Field**

The presently claimed invention is directed to a process for mineralizing carbon and storing it at mine sites. It allows for the permanent storage of large quantities of carbon dioxide, thereby preventing impacts on climate from the emissions that it offsets. The ground residue from mineral extraction is mixed with carbon to form a cementitious paste that is used to backfill cavities created during underground mining operations. The process comprises at least the steps of (1) providing carbon dioxide in an alkaline solution to form a medium containing at least one carbonate or providing carbon dioxide in the form of a concentrated carbon dioxide gas, and (2) mixing (a) at least one binder, (b) mine tailings, (c) the medium containing at least one carbonate of step (1) or the concentrated carbon dioxide gas of step (1), and (d) optionally at least one filler to obtain a cementitious paste.

**Background of the Invention**

The practice of backfilling voids in underground mining operations is a well-established method. It is generally used to fill spaces left after the extraction of valuable minerals, providing several benefits such as increasing the structural integrity of the mine, reducing surface subsidence, and improving safety. Backfilling can be accomplished using various materials, including cementitious pastes, mine tailings, and other solid wastes. Pastes used for backfilling are often flowable mixtures that harden over time to provide long-term stability within the underground environment.

Compositions for backfilling underground voids comprise mine tailings and other cementitious binders, offering improved mechanical strength and durability in underground operations. Portland cement is often added to tailings to provide cementitious properties. This material provides excellent tensile strength to the hardened mixture, but it suffers from being expensive and from producing high carbon emissions during its preparation. Alternatively hydraulic binders are used to stabilize underground voids left by mining activities, focusing on creating a more robust and long-lasting backfill solution.

Another significant environmental benefit provided by backfilled tailings is their resistance to the release of toxic contaminants. Such tailings may contain sulfide minerals that - in the presence of oxygen and water, such as found at the surface of the mine - cause the release of toxic metals and other contaminants. However, sulfide minerals are shielded from exposure to oxygen and water when tailings are backfilled and cemented, thereby preventing their release into the environment.

In recent years, carbon capture and sequestration (CCS) techniques have gained attention as part of efforts to reduce the amount of $CO_2$ released into the atmosphere. These methods involve capturing $CO_2$ from industrial sources or directly from the air, and sequestering it through converting it into a stable form, and storing it in geological formations or integrating it into solid materials. $CO_2$ mineralization, for example, is a well-known technique where $CO_2$ reacts with alkaline materials containing calcium or magnesium to form stable carbonate minerals.

Given the environmental and operational benefits of both backfilling and carbon sequestration, it would be advantageous to combine these processes. Integrating carbon sequestration into backfilling operations presents a synergistic opportunity: not only can $CO_2$ be permanently stored within the mine voids, but the materials used in the backfilling process can also be reinforced with carbonate minerals. This provides additional structural stability to the backfill material and offers a sustainable way to manage both mine tailings and $CO_2$ emissions. The process would be particularly advantageous to industrial operations that capture $CO_2$ emissions and are located close to an underground mine, as this may afford an economic option for storing the captured $CO_2$.

Hence, there is a need for a method that can combine the backfilling of voids in underground mining operations with the efficient sequestration of $CO_2$. This method would offer dual benefits: creating a structurally sound backfill while simultaneously reducing atmospheric $CO_2$ levels. The presently claimed invention seeks to address this need by introducing a backfilling process that incorporates captured $CO_2$, mineralizing it into stable carbonate forms, thereby creating an environmentally sustainable and mechanically stable backfill material.

Hence, it is an object of the presently claimed invention is to provide an efficient and environmentally sustainable process for the production of a cementitious paste used in underground operations, which simultaneously addresses the need for carbon dioxide ($CO_2$) sequestration and still shows the benefits of conventional processes for the production of a backfilling paste, such as enhanced mechanical strength, durability, and long-term stability. Additionally, the process is adaptable to different forms of $CO_2$ and mine waste compositions, providing scalability and cost-effectiveness while maintaining the operational advantages of conventional backfilling methods.

**Summary of the Invention**

Surprisingly, the object has been solved by (1) providing carbon dioxide in an alkaline solution to form a medium containing at least one carbonate or providing carbon dioxide in the form of a concentrated carbon dioxide gas, and (2) mixing (a) at least one binder, (b) mine tailings, (c) the medium containing at least one carbonate of step (1) or the concentrated carbon dioxide gas of step (1), and (d) optionally at least one filler to obtain a cementitious paste.

Hence, in one aspect the presently claimed invention is directed to a process for the production of a cementitious paste for backfilling of underground operations, wherein the process comprises at least the steps of (1) providing carbon dioxide in an alkaline solution to form a medium containing at least one carbonate or providing carbon dioxide in the form of a concentrated carbon dioxide gas, and (2) mixing (a) at least one binder, (b) mine tailings, (c) the medium containing at least one carbonate of step (1) or the concentrated carbon dioxide gas of step (1), and (d) optionally at least one filler to obtain a cementitious paste.

Hence, in another aspect, the presently claimed invention is directed to a process for filling the voids of an underground operation comprising at least the steps of

(1) providing carbon dioxide in an alkaline solution to form a medium containing at least one carbonate or providing carbon dioxide in the form of a concentrated carbon dioxide gas,
(2) mixing (a) at least one binder, (b) mine tailings, (c) the medium containing at least one carbonate of step (1) or the concentrated carbon dioxide gas of step (1), and (d) optionally at least one filler to obtain a cementitious paste,
(11) filling the cementitious paste of step (2) into voids of an underground operation, and
(22) curing the cementitious paste to obtain a solid rock product.

## Detailed Description of the Invention

The term cementitious paste within the present context refers tailings materials placed used in underground operations to fill voids, and which have received various materials to produce a paste-like, flowable consistency under ambient conditions at the mine site and are deposited in underground voids. These voids may originate from excavation processes in underground mining operations or occur naturally, such as in caves. Cementitious pastes harden over time to form a solid material, primarily through a hydration mechanism involving cement and/or other cementitious materials. This hardening process ensures stability and safety in underground spaces while maintaining flowability for easy application during filling operations.

The term underground operations within the present context refers to industrial activities conducted beneath the Earth's surface, primarily in the context of mining, tunneling, and other excavation-related processes. These operations involve the extraction of valuable minerals, ores, or other geological materials, as well as the creation of underground voids or spaces. Underground operations may also include the construction and maintenance of tunnels, caverns, and other subterranean structures for transportation, utilities, or storage purposes. These activities typically require specialized techniques for drilling, blasting, and material handling, as well as methods to ensure structural stability and safety in subterranean environments.

The term voids refers to empty or unoccupied spaces that are created as a result of excavation, mining, or tunneling activities beneath the Earth's surface. These voids can vary significantly in size and shape, depending on the type and scale of the operation. Small voids may be created during the extraction of narrow seams or veins of minerals and can range from a few cubic meters to tens of cubic meters. Large voids, such as those resulting from bulk mining methods (e.g., block caving or room and pillar mining), can be expansive, covering hundreds to thousands of cubic meters.

In step (1) carbon dioxide is provided in an alkaline solution to form a medium containing at least one carbonate. Carbon dioxide capture within the Carbonated Tailings Process (CTP) preferably handles $CO_2$ in various forms, adapting to different conditions of the captured gas. $CO_2$ is preferably dissolved in a carbonate solution, such as 1-2 molar sodium carbonate from Direct Air Capture (DAC) facilities. Alternatively, $CO_2$ is preferably handled as a gas at normal temperature (20°C) and pressure (1 bar), as pressurized gas (50 bar), or in liquefied form at elevated pressure and low temperatures between -56.6°C and 31°C with pressures greater than 5.2 bar but less than 74 bar. The CTP is robust enough to handle impurities, accepting an admixture of up to 10% air or water vapor. In a preferred embodiment, transportation of captured $CO_2$ to the CTP reactor can be achieved through various methods: directly via short pipes if the source is nearby, through pipelines, or transported via trucks, trains, or ships. Multi-modal transportation is also feasible, but over longer distances, $CO_2$ often needs to be liquefied, requiring high purity to avoid issues such as ice formation during the cooling process. In a preferred embodiment, the $CO_2$ required for the CTP is produced by well-known technologies comprising Direct Air Capture (DAC) plants, carbon capture systems from industrial flue stacks, bioenergy with carbon capture and storage (BECCS) from power plants, and biogas extraction.

A medium containing at least one carbonate which is present in the form of a solution or slurry is produced by the CTP. This medium facilitates the carbon dioxide mineralization process, wherein dissolved carbonates react with divalent cations, such as calcium or magnesium, to form stable carbonate minerals.

In a preferred embodiment, the medium containing at least one carbonate used in the backfilling process has a solid content ranging from $\geq 20$ wt.-% to $\leq 50$ wt.-%, based on the total amount of the medium. This solid content ensures an optimal balance between fluidity and material strength, allowing the medium and slurry, respectively, to be easily pumped or transported while providing sufficient particle density for effective carbonation and hardening. The solid content range also supports better binding and stabilization of mine tailings in cementitious applications, enhancing the mechanical properties of the backfill material.

In a preferred embodiment, the alkaline solution has a pH value in the range of $\geq 8.0$ to $\leq 11.0$. This alkaline environment is critical for the dissolution of carbon dioxide and the formation of carbonate ions, which subsequently react with calcium or magnesium to form stable carbonate minerals like calcium carbonate which is also referred to as mineralization of carbon dioxide in an alkaline solution. In the mineralization of carbon dioxide in an alkaline solution, carbon dioxide ($CO_2$) is dissolved in water, forming carbonic acid ($H_2CO_3$). The carbonic acid dissociates into bicarbonate ($HCO_3^-$) and carbonate ions ($CO_3^{2-}$), which are central to the mineralization process. In an alkaline environment, the carbonate ions ($CO_3^{2-}$) dominate, making the solution conducive to forming stable carbonate minerals. The mineralization process involves reacting these carbonate ions with divalent metal cations like calcium ($Ca^{2+}$), magnesium ($Mg^{2+}$), or manganese ($Mn^{2+}$) to precipitate carbonate minerals, such as calcium carbonate ($CaCO_3$), magnesium carbonate ($MgCO_3$), or manganese carbonate ($MnCO_3$). Calcium carbonate is preferred due to its stability and low solubility in water, ensuring long-term storage of $CO_2$.

In a preferred embodiment, the at least one carbonate is selected from the group consisting of calcium carbonate, magnesium carbonate, manganese carbonate, sodium carbonate, and iron carbonate, with calcium carbonate being the preferred carbonate. Calcium carbonate is particularly advantageous due to its low solubility and stability, which ensures that carbon dioxide is effectively sequestered in a solid form. Additionally, calcium carbonate contributes to the mechanical strength of the backfill material, providing long-term durability and resistance to degradation in underground environments.

In a practical application, such as the Carbonated Tailings Process (CTP), calcium oxide (CaO), or quicklime, is preferably introduced into the water to increase the solution's alkalinity and provide a source of calcium. As $CO_2$ gas is bubbled through the solution, it reacts with the dissolved calcium hydroxide ($Ca(OH)_2$) to precipitate solid calcium carbonate ($CaCO_3$) in an exothermic reaction. This reaction not only captures $CO_2$ but also stabilizes the mining waste by incorporating carbonate minerals into the waste matrix. The resulting mineralized $CO_2$ remains locked in solid form, providing a permanent storage solution for the gas, preventing its release into the atmosphere for over a thousand years.

In a preferred embodiment, the $CO_2$ capture process in step (1) is carried out in a batch reactor operating at normal pressure, i.e., 1 bar absolute. The batch reactor is designed to handle the carbonation process efficiently by adding all the required ingredients into the vessel at the start of each batch. The reaction begins at ambient temperature, approximately 20°C, and continues until the desired carbonation reaction is complete. As the carbonation reaction is exothermic, the apparatus is designed to withstand temperatures up to 70°C, ensuring the safety and stability of the process. The reactor includes control mechanisms to balance the temperature build-up and heat dissipation during the reaction.

In a preferred embodiment, the reactor is modular in design, allowing for scalability based on site-specific needs. Each individual reactor unit has a standardized size, approximately 1.4 m wide, 1.4 m long, and 1.8 m tall, with a volume of about 3.5 m$^3$. This modularity keeps costs low and ensures process optimization, allowing for seamless expansion when required.

In a preferred embodiment, the process involves feeding both $CO_2$ and calcium hydroxide ($Ca(OH)_2$) into the reactor. $CO_2$ is bubbled through the alkaline solution of $Ca(OH)_2$ to initiate the mineralization process, forming calcium carbonate ($CaCO_3$) as the primary product. The feed of reactants is carefully controlled to optimize the reaction and ensure that unreacted $Ca(OH)_2$ can be preserved for later use in the binding process. This dual-purpose use of $Ca(OH)_2$, as both a mineralization agent and a binding agent, enhances the efficiency and effectiveness of the overall process.

Carbon dioxide is captured, preferably from air, using systems such as advanced direct air capture (DAC) systems. These systems effectively separate $CO_2$ from the ambient air, producing a concentrated carbon dioxide gas stream. Concentrated carbon dioxide gas refers to a product with a high purity level, preferably in the range of $\geq 90$ wt.-% to $\leq 99$ wt.-%, more preferably $\geq 92$ wt.-% to $\leq 99$ wt.-%, and even more preferably in the range of $\geq 95$ wt.-% to $\leq 99$ wt.-%, based on the total volume of the concentrated carbon dioxide gas. While $CO_2$ constitutes the primary component, trace amounts of nitrogen, oxygen, and water vapor, which are present in ambient air, may remain as minor impurities.

In a preferred embodiment, the carbon dioxide is captured by at least one method selected from the group consisting of direct air capture (DAC), carbon capture and storage (CCS), post-combustion capture, pre-combustion capture, oxy-fuel combustion, chemical looping, natural gas processing, fermentation-based capture, and cryogenic distillation to form a concentrated carbon dioxide gas.

Direct air capture (DAC) involves removing carbon dioxide directly from the ambient air using chemical sorbents or solid adsorbents. The source of $CO_2$ is the atmosphere, where concentrations are around 400-420 parts per million (ppm). DAC systems typically achieve a high concentration of carbon dioxide in the product gas, ranging from $\geq 90$ wt.-% to $\leq 99$ wt.-%, with further purification reaching up to 99.9 wt.-%. This technique is particularly advantageous for its ability to reduce atmospheric $CO_2$ levels and address climate change.

Carbon capture and storage (CCS) captures $CO_2$ emissions from large industrial sources, such as power plants and factories, before they enter the atmosphere. The $CO_2$ concentration in flue gases is typically between 5% and 15% by volume, but the process produces a concentrated $CO_2$ stream with a purity of $\geq 90$ wt.-% to $\leq 99$ wt.-%, depending on the capture method used. This $CO_2$ is then compressed and transported to storage sites for sequestration, such as underground geological formations.

Post-combustion capture is a widely used technique where $CO_2$ is extracted from flue gases produced by burning fossil fuels or biomass. Using chemical solvents, such as amines, the $CO_2$ is absorbed and later stripped to form a concentrated gas stream. The resulting product gas typically contains $\geq 90$ wt.-% to $\leq 99$ wt.-% $CO_2$. This method is effective for retrofitting existing power plants and industrial facilities.

Pre-combustion capture involves converting fuels like coal or natural gas into a mixture of hydrogen and $CO_2$ (syngas) before combustion. The $CO_2$ is separated from the hydrogen using chemical solvents or membranes. The process produces a concentrated $CO_2$ gas stream with a purity of $\geq 95$ wt.-% to $\leq 99$ wt.-%. This method is commonly employed in hydrogen production and integrated gasification combined cycle (IGCC) plants.

In oxy-fuel combustion, fuels are burned in pure oxygen instead of air, resulting in a flue gas primarily composed of $CO_2$ and water vapor. After water removal, the $CO_2$ concentration in the gas stream is $\geq 90$ wt.-% to $\leq 95$ wt.-%. This technique is advantageous for producing highly concentrated $CO_2$ suitable for sequestration or utilization while reducing nitrogen oxides emissions.

Chemical looping uses metal oxides as oxygen carriers to separate $CO_2$ during fuel combustion. The process inherently produces a concentrated $CO_2$ stream with a purity of $\geq 95$ wt.-% to $\leq 99$ wt.-%. It is highly efficient, as it avoids direct contact between fuel and air, making it a promising technology for reducing $CO_2$ emissions in power and industrial sectors.

Natural gas processing removes $CO_2$ from raw natural gas during purification to meet pipeline quality standards. The $CO_2$ concentration in the raw gas varies but is typically between 5% and 20% by volume. The process produces a concentrated $CO_2$ stream with a purity of $\geq 95$ wt.-% to $\leq 99.9$ wt.-%, depending on the capture method, such as membranes or amine-based systems. This $CO_2$ can be used for enhanced oil recovery or sequestration.

Fermentation-based capture collects $CO_2$ emitted during biological processes like ethanol or beer production. The $CO_2$ concentration in the emitted gas stream is typically high, often exceeding 95 wt.-%, with further purification achieving up to 99.5 wt.-%. This method is simple and cost-effective for capturing $CO_2$ from small-scale industrial processes.

Cryogenic distillation separates $CO_2$ from gas mixtures by cooling and compressing the gases to condense $CO_2$. The concentration of $CO_2$ in the final product can reach $\geq 99.9$ wt.-%, making it one of the most effective methods for producing ultra-pure $CO_2$. This technique is particularly suitable for high-purity applications in food and beverage industries or chemical manufacturing.

In a preferred embodiment, the at least one binder is selected from the group consisting of Portland cement, blended cement, pozzolanic materials, and geopolymer cement. This selection process is optimized based on specific mechanical properties, environmental conditions, and application requirements.

In a preferred embodiment, the at least one binder is Portland cement. Portland cement comprises limestone and clay. Portland cement undergoes calcination at high temperatures to form clinker, which is ground into a fine powder. The hydration process results in the formation of calcium silicate hydrate (C-S-H) and calcium hydroxide, which are crucial for strength and durability. Portland cement comprises limestone and clay, and the proportion of these components is crucial for achieving the desired properties of the final cement product. High-purity limestone is preferred to minimize impurities. The particle size of limestone might be optimized to improve reactivity during calcination, enhancing clinker formation efficiency. The type and composition of clay used can significantly influence clinker properties. Selecting specific types of clay with favorable mineralogical compositions, such as kaolinite or illite, could help achieve desired characteristics in the final cement product.

Portland cement is categorized into different types according to the EN 197-1 standard, which defines various cement types based on their composition. In a preferred embodiment, the Portland cement comprises CEM I, CEM II, CEM III, CEM IV, and CEM V.

In a preferred embodiment, the at least one binder is blended cement. Blended cement comprises supplementary cementitious materials (SCMs) such as fly ash, slag, and silica fume into the mixture of limestone and clay. SCMs improve durability, resistance to chemical attacks, and reduce the carbon footprint. Fly ash improves workability and durability of cement. The particle size for fly ash is preferably in the range of $\geq 1$ $\mu$m to $\leq 45$ $\mu$m. Fine fly ash particles, particularly those $\leq 20$ $\mu$m, are highly reactive due to their increased surface area. This fine particle size range enhances the pozzolanic activity of fly ash, leading to the formation of additional calcium silicate hydrate (C-S-H) during the hydration process. The increased C-S-H content contributes to improved compressive strength and reduced permeability of the concrete, making it suitable for high-strength and durable applications. The fly ash is preferably ultra-fine fly ash having a particle size $\leq 10$ $\mu$m. The silica content in fly ash is preferably in the range of $\geq 50$ wt.-% to $\leq 70$ wt.-%, based on the total weight of the fly ash. High levels of reactive silica are crucial for the pozzolanic reaction, where silica reacts with calcium hydroxide (a by-product of cement hydration) to form additional C-S-H. The preferred alumina content in fly ash is in the range of $\geq$ 20% wt.-% to $\leq$ 30% wt.-%.

In a preferred embodiment, the slag is selected from the group consisting of ground granulated blast furnace flag, steel slag, copper slag and phosphorus slag.

In a preferred embodiment, the slag used is Ground Granulated Blast Furnace Slag (GGBFS). GGBFS is a by-product of the iron-making process in a blast furnace. It is formed when molten slag is rapidly quenched with water, resulting in a granular material that is then ground to a fine powder. Preferably, the particle size of GGBFS is in the range of $\geq$10 $\mu$m to $\leq$50 $\mu$m, which enhances its reactivity when used as a supplementary cementitious material (SCM). In a preferred embodiment, the slag is Steel Slag. Steel slag is a by-product of the steel-making process, where impurities are separated from molten steel. It contains a composition primarily of oxides of calcium, iron, silicon, and magnesium. Preferably, the particle size of steel slag is in the range of $\geq$ 20 $\mu$m to $\leq$ 100 $\mu$m. In a preferred embodiment, the slag is Copper Slag. Copper slag is generated as a by-product during the copper smelting process and consists mainly of iron, silicate, and alumina compounds. Preferably, the particle size of copper slag is in the range of $\geq$10 $\mu$m to $\leq$60 $\mu$m. This particle size range ensures that copper slag is effectively used as an SCM, enhancing the strength and durability of concrete. In a preferred embodiment, the slag is Phosphorus Slag. Phosphorus slag is a by-product of elemental phosphorus production and contains primarily calcium silicates and calcium aluminates. Preferably, the particle size of phosphorus slag is in the range of $\geq$10 $\mu$m to $\leq$50 $\mu$m.

In a preferred embodiment, the Portland cement comprises slag, specifically Ground Granulated Blast Furnace Slag (GGBFS), wherein the content of GGBFS is in the range of $\geq$ 20 wt% to $\leq$ 80 wt%, with a more preferred range of $\geq$ 40 wt% to $\leq$ 75 wt%, based on the dry weight of the cement.

In a preferred embodiment, the supplementary cementitious material used is Silica Fume. Silica fume is an ultra-fine by-product of the silicon and ferrosilicon alloy production process, consisting primarily of amorphous silicon dioxide ($SiO_2$). Preferably, the particle size of silica fume is in the range of $\geq$0.1 $\mu$m to $\leq$1 $\mu$m. This extremely fine particle size gives silica fume a high surface area, which significantly enhances its pozzolanic reactivity when used in concrete.

In a preferred embodiment, the at least one binder is a pozzolanic material. Pozzolanic materials, such as fly ash, silica fume, calcined oil shale, and volcanic ash, are characterized by their ability to react with calcium hydroxide (a by-product of cement hydration) in the presence of moisture to form additional calcium silicate hydrate (C-S-H). This pozzolanic reaction enhances the long-term strength, durability, and chemical resistance of the concrete. Preferably, the pozzolanic materials have particle sizes ranging from $\geq$ 1 $\mu$m to $\leq$45 $\mu$m. Calcined oil shale is a processed material derived from oil shale deposits. Calcined oil shale contains reactive silicates and aluminates that, when combined with calcium hydroxide, form stable C-S-H phases. The use of calcined oil shale as a pozzolanic material contributes to early strength development and long-term durability, particularly in concrete exposed to harsh environmental conditions, such as acidic soils or marine environments. Volcanic ash is a natural pozzolan rich in reactive silica. Volcanic ash reacts with calcium hydroxide to enhance the durability and longevity of the concrete.

In a preferred embodiment, the at least one binder is a geopolymer cement. Geopolymer cement is produced by activating industrial by-products like fly ash and slag with alkaline solutions (e.g., sodium hydroxide, potassium hydroxide). The resulting matrix exhibits excellent mechanical properties, chemical resistance, and thermal stability. This embodiment could explore optimizing the concentration of alkaline solutions and curing conditions to enhance geopolymer cement performance in precast concrete elements, repair materials, and environmentally sustainable construction.

In the context of mining, mine tailings are typically the residual materials left after the extraction of valuable minerals or metals from the ore. The chemical composition of mine tailings varies widely depending on the location and composition of the mineral deposit, as well as the extraction methods used. Tailings may also be affected by the storage conditions and duration after extraction. Physically, tailings range from fine particles to coarser materials, with their size and shape often influenced by the mechanical treatment of the ore during processing. In most cases, tailings contain a mixture of fine residual minerals and waste material, with valuable ores present in very low concentrations, making them unsuitable for further extraction by conventional methods like flotation.

The specific composition of mine tailings used in underground backfilling operations preferably varies depending on the type of ore being mined. Tailings may include residual minerals like quartz, phyllosilicates, and other silicates, with their makeup influenced by the geological characteristics of the mining site and the extraction processes used. For example, in copper mining, tailings often contain chalcopyrite or bornite, while iron ore mining results in tailings with higher concentrations of hematite or magnetite. In gold mining, tailings typically contain quartz, arsenopyrite, and other sulfide minerals. Importantly, because these tailings are used within underground operations, there are generally no strict limitations on the sulfide content, allowing sulfide-rich tailings, such as those from lead-zinc mining, to be effectively reused without environmental risks related to surface exposure.

In a preferred embodiment, the mine tailings contain silica, also referred to as quartz, in an amount ranging from $\geq$ 30 wt.-% to $\leq$ 97 wt.-%, with more preferred ranges being $\geq$ 40 wt.-% to $\leq$ 80 wt.-%, based on the total weight of the mine tailings.

Quartz is a naturally occurring mineral composed of silicon dioxide ($SiO_2$). It is one of the most abundant minerals on Earth and has a crystalline structure. Quartz is often found in mining tailings, which are the residual mineral materials left over after the extraction of valuable resources from ore. In the context of mining and backfilling processes, quartz is commonly present in tailings along with other minerals like phyllosilicates and other silicates such as anorthite and actinolite. Phyllosilicates are a group of silicate minerals that are characterized by their layered structure. These minerals have tetrahedral layers of silicate ($SiO_4$) bonded to octahedral layers of metal oxides (like aluminum or magnesium). The layers are stacked and bonded weakly, which gives phyllosilicates their characteristic softness and cleavage. Some specific phyllosilicates are lizardite, kaolinite, biotite/muscovite and chlorite.

In a preferred embodiment, the mine tailings have a particle size D50 in the range of $\geq$ 10 $\mu$m to $\leq$ 500 $\mu$m, with more preferred ranges being $\geq$ 50 $\mu$m to $\leq$ 300 $\mu$m, determined according to ISO 13320, which specifies laser diffraction methods for particle size analysis.

In a preferred embodiment, dewatered mine tailings are used so that the mine tailings have a solid content in the range of $\geq$ 60 wt.-% to $\leq$ 90 wt.-%, with more preferred ranges being $\geq$ 70 wt.-% to $\leq$ 85 wt.-%, based on the total amount of mine tailings.

In a preferred embodiment, sources of calcium and alkalinity, such as calcium hydroxide, are preferably mixed with components (a) at least one binder, (b) mine tailings, (c) the medium containing at least one carbonate, and optionally (d) at least one filler. The addition of calcium hydroxide enhances the alkalinity of the mixture, promoting the effective carbonation of the carbon dioxide captured in the alkaline solution. This leads to the formation of stable calcium carbonate, which contributes to the hardening and stabilization of the cementitious paste. In a preferred embodiment, the mixture comprising the components (a) at least one binder, (b) mine tailings, (c) the medium containing at least one carbonate, and optionally (d) at least one filler has a pH value in the range of $\geq$ 12.0 to $\leq$ 13.0.

In a preferred embodiment, the process involves using calcium hydroxide ($Ca(OH)_2$) as the mineralization partner for $CO_2$ in step (1). The process is divided into two distinct steps to optimize both the mineralization and binding processes. In step (1), $CO_2$ is captured in an alkaline solution containing $Ca(OH)_2$, and the mineralization reaction is interrupted before full completion, allowing some of the calcium hydroxide to remain unreacted. This partial mineralization ensures that while stable carbonate minerals such as calcium carbonate ($CaCO_3$) are formed, a portion of the remaining $Ca(OH)_2$ is preserved. In step (2), the unreacted calcium hydroxide is utilized during the binding process. By incorporating this remaining $Ca(OH)_2$ into the cementitious paste, which contains at least one binder, mine tailings, and optionally a filler, the alkalinity provided by the calcium hydroxide contributes to the hydration reactions necessary for the binding and hardening of the paste. This dual use of $Ca(OH)_2$ maximizes its efficiency, allowing it to serve both as a mineralization agent for $CO_2$ sequestration and as a crucial component in the binding process, thereby improving the overall stability and durability of the cementitious paste.

In a preferred embodiment, water is preferably mixed with components (a) at least one binder, (b) mine tailings, (c) the medium containing at least one carbonate, and optionally (d) at least one filler, to produce a cementitious paste. Water acts as a mixing agent and hydrates the binder to initiate the curing process. Depending on the desired characteristics of the cementitious paste, the water content is preferably adjusted to maintain workability and flow during the pumping process or conveyance of the backfill to the target location. In an embodiment, the content of water in the mixture for producing a cementitious paste is carefully controlled to fall within the range of $\geq$ 10.0 wt.-% to $\leq$ 40 wt.-%, more preferably $\geq$ 15 wt.-% to $\leq$ 35 wt.-%, and even more preferably $\geq$ 20 wt.-% to $\leq$ 30 wt.-%, based on the total weight of the mixture.

In a preferred embodiment, the process involves mixing component (a) and component (b) in a weight ratio of $\geq$ 1:5 to $\leq$ 1:50, more preferably $\geq$ 1:8 to $\leq$ 1:20, ensuring a balance between cost efficiency and mechanical strength. This ratio allows for sufficient cement to promote hardening and compressive strength while keeping the cement usage economical.

In a preferred embodiment, the content of component (a) is in the range of $\geq$ 2.0 wt.-% to $\leq$ 20 wt.-%, more preferably $\geq$ 3.0 wt.-% to $\leq$ 12 wt.-%, even more preferably $\geq$ 4.0 wt.-% to $\leq$ 8 wt.-%, based on the total amount of the mixture. This range optimizes the hardening of the cementitious paste while maintaining cost-effectiveness by minimizing the cement content.

In a preferred embodiment, the process involves mixing component (b) and component (c) in a weight ratio of $\geq$ 3:1 to $\leq$ 10:1, more preferably in the range of $\geq$ 4:1 to $\leq$ 8:1, ensuring efficient use of tailings while maintaining the beneficial effects of the carbonate medium in stabilizing the mixture. This ratio provides sufficient tailings content for bulk backfilling while allowing the carbonate medium to contribute to the mechanical and chemical properties of the paste, such as improved strength and durability.

In a preferred embodiment, the content of component (b) is in the range of $\geq$ 60 wt.-% to $\leq$ 90 wt.-%, more preferably the range of $\geq$ 70 wt.-% to $\leq$ 85 wt.-%, based on the total amount of the mixture. This range ensures that the majority of the cementitious paste consists of tailings, which are cost-effective and provide the bulk necessary for filling voids in underground operations.

In a preferred embodiment, the content of component (c) is controlled to be in the range of $\geq$ 10.0 wt.-% to $\leq$ 30 wt.-%, more preferably $\geq$ 15 wt.-% to $\leq$ 25 wt.-%, based on the total amount of the mixture. This range optimizes the mineralization process of carbon dioxide while ensuring that the carbonate medium contributes to the stability and mechanical integrity of the paste.

In an embodiment, the process involves controlling the weight ratio of component (a) (at least one binder) to component (c) (the medium containing at least one carbonate) in the range of ≥ 1:2 to ≤ 1:10, more preferably in the range of ≥ 1:3 to ≤ 1:6. This ensures that the binder is used in conjunction with a sufficient amount of carbonate medium to provide the necessary stabilization and chemical reactions for solidification and long-term durability.

In a preferred embodiment, the cementitious paste comprises at least one filler (d) which is selected from the group consisting of silica fume, fly ash, and slag, more preferably fly ash and slag due to their availability and effectiveness in enhancing the mechanical properties of the paste. The inclusion of these fillers ensures improved binding and strength characteristics in the final cementitious paste, always ensuring that the desired paste properties are achieved.

In a preferred embodiment, the presently claimed invention is directed to a process for the production of a cementitious paste for backfilling of underground operations, wherein the process comprises at least the steps of:

> (1) providing carbon dioxide in an alkaline solution to form a medium containing at least one carbonate, and
> (2) mixing:

>> (a) at least one binder, in an amount of ≥ 4.0 wt.-% to ≤ 20.0 wt.-%, more preferably ≥ 3.0 wt.-% to ≤ 12 wt.-%, based on the total amount of the mixture,
>> (b) mine tailings, in an amount of ≥ 60 wt.-% to ≤ 90 wt.-%, more preferably the range of ≥ 70 wt.-% to ≤ 85 wt.-%, based on the total amount of the mixture,
>> (c) the medium containing at least one carbonate of step (1), in an amount of ≥ 10 wt.-% to ≤ 30 wt.-%, more preferably ≥ 15 wt.-% to ≤ 25 wt.-%, based on the total amount of the mixture, and
>> (d) optionally at least one filler, to obtain a cementitious paste.

In a more preferred embodiment, the presently claimed invention is directed to a process for the production of a cementitious paste for backfilling of underground operations, wherein the process comprises at least the steps of:

> (1) providing carbon dioxide in an alkaline solution at a pH value in the range of ≥ 8.0 to ≤ 11.0 to form a medium containing at least one carbonate, and
> (2) mixing:

>> (a) at least one binder, in an amount of ≥ 4.0 wt.-% to ≤ 20.0 wt.-%, more preferably ≥ 3.0 wt.-% to ≤ 12 wt.-%, based on the total amount of the mixture,
>> (b) mine tailings, in an amount of ≥ 60 wt.-% to ≤ 90 wt.-%, more preferably the range of ≥ 70 wt.-% to ≤ 85 wt.-%, based on the total amount of the mixture,
>> (c) the medium containing at least one carbonate of step (1), in an amount of ≥ 10 wt.-% to ≤ 30 wt.-%, more preferably ≥ 15 wt.-% to ≤ 25 wt.-%, based on the total amount of the mixture, and
>> (d) optionally at least one filler, at a pH value in the range of ≥ 12.0 to ≤ 13.0, to obtain a cementitious paste.

In an even more preferred embodiment, the presently claimed invention is directed to a process for the production of a cementitious paste for backfilling of underground operations, wherein the process comprises at least the steps of:

> (1) providing carbon dioxide in an alkaline solution containing calcium hydroxide at a pH value in the range of ≥ 8.0 to ≤ 11.0 to form a medium containing calcium carbonate, and
> (2) mixing (a) at least one binder, (b) mine tailings, (c) the medium containing calcium carbonate of step (1), calcium hydroxide, and (d) optionally at least one filler, at a pH value in the range of ≥ 12.0 to ≤ 13.0, to obtain a cementitious paste,

whereby a portion of the calcium hydroxide from step (1) remains unreacted and is incorporated into the mixture in step (2).

In yet another more preferred embodiment, the presently claimed invention is directed to a process for the production of a cementitious paste for backfilling of underground operations, wherein the process comprises at least the steps of:

> (1) providing carbon dioxide in an alkaline solution containing calcium hydroxide at a pH value in the range of ≥ 8.0 to ≤ 11.0 to form a medium containing calcium carbonate, and
> (2) mixing:

>> (a) at least one binder, in an amount of ≥ 4.0 wt.-% to ≤ 20.0 wt.-%, more preferably ≥ 3.0 wt.-% to ≤ 12 wt.-%, based on the total amount of the mixture,

(b) mine tailings, in an amount of ≥ 60 wt.-% to ≤ 90 wt.-%, more preferably the range of ≥ 70 wt.-% to ≤ 85 wt.-%, based on the total amount of the mixture,

(c) the medium containing calcium carbonate of step (1), in an amount of ≥ 10 wt.-% to ≤ 30 wt.-%, more preferably ≥ 15 wt.-% to ≤ 25 wt.-%, based on the total amount of the mixture, calcium hydroxide, and

(d) optionally at least one filler, at a pH value in the range of ≥ 12.0 to ≤ 13.0, to obtain a cementitious paste,

whereby a portion of the calcium hydroxide from step (1) remains unreacted and is incorporated into the mixture in step (2).

In a preferred embodiment, in step (2) the temperature is maintained in the range of ≥ 10 °C to ≤ 30 °C, more preferably in the range of ≥ 15 °C to ≤ 25 °C.

In a preferred embodiment, in step (2), the duration of mixing is in the range of ≥ 10 minutes to ≤ 2 hours, more preferably in the range of 20 minutes to 1.5 hours, ensuring that the mixing process is sufficient to form a cementitious paste with the desired properties. This controlled mixing time guarantees optimal homogenization of the components, leading to improved consistency and performance of the cementitious paste.

In a preferred embodiment, in step (2), the stirring rate is in the range of ≥ 100 rpm to ≤ 1500 rpm, more preferably between 200 and 1200 rpm, ensuring consistent mixing throughout the process. This controlled stirring rate ensures optimal interaction between the components, resulting in a homogenous mixture and ultimately achieving the desired paste properties.

In a preferred embodiment, in step (2), the energy input is in the range of ≥ 0.5 to ≤ 5.0 kWh per kg of the mixture comprising components (a), (b), and (c), more preferably in the range of 1.0 to 4.0 kWh per kg, ensuring that the process provides sufficient energy for effective component integration. This precise energy input helps maintain the ideal process conditions to form a cementitious paste with the desired structural and chemical properties.

In a preferred embodiment, the process involves mixing components (a), (b), (c) and optionally (d), wherein the mixing is performed using a high-shear mixer to ensure uniform dispersion and optimal consistency of the materials. Suitable mixers for this process include, but are not limited to, Hobart mixers, portable concrete mixers, mixing trucks, mixing buckets, paddle mixers, jet mixers, screw mixers, auger mixers, horizontal single shaft mixers, twin shaft paddle mixers, vertical shaft mixers, ribbon blenders, orbiting mixers, change-can mixers, tumbling vessels, extruders, vertical agitated chambers, or air agitated operations.

In a preferred embodiment, in step (2), the mixing is carried out either as a batch process or a continuous process, more preferably as a continuous process for large-scale operations. This ensures flexibility in the process design, where batch processing offers greater control in smaller applications, while continuous processing allows for efficient handling of larger volumes, always ensuring that the cementitious paste with the desired properties is formed consistently.

In a preferred embodiment, the cementitious paste has a slump flow in the range of ≥ 80 mm to ≤ 250 mm, preferably in the range of ≥ 80 mm to ≤ 200 mm, more preferably in the range of ≥ 80 mm to ≤ 200 mm, determined according to EN 12350-5. A higher slump flow value typically indicates a more fluid paste that can be pumped and applied more easily. However, an excessively high slump flow could result in segregation of the components or insufficient structural stability once placed, while a lower slump flow could lead to blockages in pipes and difficulty in pumping the paste. Maintaining an appropriate slump flow ensures smooth operation during underground backfilling, avoiding issues such as blockages, cavitation, or excessive wear on system components.

In a preferred embodiment, the cementitious paste has a porosity in the range of ≥ 10 % by volume to ≤ 40 % by volume, more preferably in the range of ≥ 15 % by volume to ≤ 35 % by volume. This porosity range is essential for ensuring the mechanical stability and curing characteristics of the paste, allowing for adequate strength development while maintaining the necessary fluidity for underground placement. The control of porosity ensures that the cementitious paste achieves the desired structural properties once set, providing stability in underground applications.

In a preferred embodiment, the cementitious paste has a solid content in the range of ≥ 60 wt.-% to ≤ 90 wt.-%, more preferably in the range of 70 wt.-% to 85 wt.-%, based on the total amount of the cementitious paste. This solid content ensures that the paste has sufficient strength and cohesiveness for backfilling applications, particularly in underground environments, while maintaining workability and pumpability. Achieving this solid content is crucial for forming a durable cementitious paste that meets both the flow and structural requirements of the process, always ensuring the paste achieves the desired mechanical properties.

In a preferred embodiment, the process for producing the cementitious paste includes an additional solid-liquid separation step after mixing the components, but before filling the paste into the underground voids. This step is used to increase the solid content of the cementitious paste, enhancing its mechanical properties and reducing the amount of water required for filling. After mixing components (a) at least one binder, (b) mine tailings, (c) the medium containing at least one carbonate, and optionally (d) at least one filler, the cementitious paste undergoes dewatering to achieve a higher solid content. This process increases the solid content to greater than 50 wt.-%, and in some cases, it may be dewatered further to form a filter cake with a solid content of greater than 90 wt.-%. The filter cake can then be rehydrated at the paste plant, where the necessary process water is added directly before filling into the voids. The dewatering step can be accomplished using typical solid-liquid separation methods, such as vacuum filters or sedimentation tanks. In some instances, flocculant chemicals may be added to enhance the separation process. Although this additional step adds complexity and cost, it may be implemented when it is necessary and economically viable to optimize the paste's solid content and performance in underground operations.

In one embodiment, the process of mixing concentrated carbon dioxide gas with slurries comprising at least one binder (b) and mine tailings (c) requires equipment capable of ensuring efficient gas-liquid-solid interaction. A key component of the system is a gas-injection mixer or high-shear mixer, equipped with nozzles for the uniform distribution of $CO_2$ gas into the slurry. The nozzles are designed to create microbubbles, increasing the surface area for gas-liquid contact, and promoting rapid carbonation reactions. The mixer may also incorporate an agitator or impeller to maintain a homogenous slurry and prevent sedimentation of solid particles during mixing. The mixing vessel for this process is preferably a pressurized reactor or tank equipped with internal baffles to enhance turbulence and mixing efficiency. The reactor is constructed from materials resistant to alkaline conditions and carbonation, such as stainless steel or coated composites. The vessel may include multiple inlets for the simultaneous addition of the binder, mine tailings, and concentrated carbon dioxide gas, as well as sensors to monitor pressure, temperature, and pH during the process. A controlled environment ensures optimal carbonation conditions, such as maintaining pressures between 1 and 10 bar and temperatures between 20°C and 60°C. To ensure effective mixing of concentrated carbon dioxide gas with the slurry, the process employs a combination of mechanical agitation and gas diffusion techniques. Mechanical agitation, achieved through a rotating impeller or paddle, disperses the gas evenly throughout the slurry. Additionally, a sparger or diffuser system introduces $CO_2$ gas at the base of the vessel, allowing it to rise and interact with the binder and mine tailings. This setup facilitates the reaction between the $CO_2$ gas and the alkaline components in the binder, forming stable carbonates that enhance the cementitious properties of the paste.

In a preferred embodiment, the process includes precise control over reaction parameters to optimize the carbonation process. The introduction rate of concentrated $CO_2$ gas is controlled using flow meters and valves to ensure a consistent gas-to-slurry ratio. Real-time monitoring of pH ensures the alkalinity of the medium is maintained, allowing for efficient conversion of $CO_2$ into carbonates. Automated systems may be employed to adjust the flow of $CO_2$ or other inputs based on real-time data, ensuring process consistency and product quality. The described equipment and process are scalable, enabling the production of cementitious paste in both small-scale and large-scale operations. Modular systems can be deployed at remote mining sites, incorporating mobile mixing units for field use. The process integrates seamlessly with existing infrastructure in mining and construction industries, offering a sustainable approach to utilizing concentrated $CO_2$ gas and mine tailings.

The cementitious paste used for underground backfilling is carefully engineered to achieve an optimal balance between fluidity and strength, which is crucial for both ease of application and long-term stability. Key parameters such as slump flow, solid content, and porosity are meticulously controlled. In a preferred embodiment, the cementitious paste has a slump flow in the range of $\geq 80$ mm to $\leq 250$ mm, more preferably in the range of $\geq 80$ mm to $\leq 200$ mm, as determined by EN 12350-5; a porosity in the range of $\geq 10\%$ and $\leq 40\%$ by volume, more preferably between $\geq 15\%$ and $\leq 35\%$ by volume; and a solid content of the paste within the range of $\geq 60$ wt.-% to $\leq 90$ wt.-%, more preferably between 70 wt.-% and 85 wt.-%, ensuring the cementitious paste has sufficient strength and cohesiveness for underground applications while maintaining its workability and pumpability.

In a further aspect, the presently claimed invention is directed to a process for filling the voids of an underground operation comprising the steps of

(11) filling the cementitious paste obtained by the process as described above into voids of an underground operation, and
(22) curing the cementitious paste to obtain a solid rock product.

In a preferred embodiment, the cementitious paste comprises mine tailings, at least one binder (such as Ordinary Portland Cement or calcined oil shale activated with calcium hydroxide), and a carbonate medium. The paste is preferably prepared with a slump flow in the range of $\geq 80$ mm to $\leq 200$ mm to ensure sufficient flowability and pumpability. The paste is pumped into the underground voids using high-pressure pumps (up to 70 bar) through metal pipes. The pumping process ensures uniform filling of the voids without causing blockages or segregation of the components. In a preferred embodiment, the voids created by underground operations range from small cavities to large excavations. Depending on the size of the void, the cementitious paste is either pumped through pipelines for larger voids or gravity-fed for smaller cavities. The paste is evenly distributed within the void to ensure complete filling, leaving no gaps or air pockets. This step is crucial to provide structural support for the surrounding mine workings. In a preferred embodiment, the flow and viscosity of the cementitious paste are controlled during the filling process to prevent the formation of cavitation, bubbles, or blockages in the piping system. A viscosity range of $\geq 800$ cP to $\leq 5000$ cP is maintained during pumping, ensuring smooth flow into the underground voids. This flow control helps maintain the integrity of the filled area and ensures that the paste retains its workability during the filling process.

In a preferred embodiment, after the cementitious paste is placed in the void, the curing process occurs under controlled environmental conditions. The paste is cured at a temperature in the range of $\geq 10°C$ to $\leq 30°C$, and the humidity is maintained at $\geq 90\%$ to promote optimal hydration of the binder. This controlled curing environment ensures that the cementitious paste hardens uniformly, forming a stable, solid rock-like structure. In a preferred embodiment, the curing process continues for a period of several weeks, allowing the cementitious paste to fully harden. Over time, the paste achieves a compressive strength in the range of $\geq 0.5$ MPa to $\leq 10.0$ MPa, determined according to EN 12190, after 28 days. The gradual increase in strength ensures that the filled void can provide adequate support to the surrounding rock formations. In a preferred embodiment, the solid rock product formed after curing exhibits minimal shrinkage, in the range of $\geq 0.05\%$ to $\leq 0.2\%$ by volume, after 28 days. The low shrinkage reduces the risk of cracks or gaps forming in the filled void, ensuring long-term stability and preventing structural failure of the surrounding mine areas. In a preferred embodiment, the curing process ensures the stabilization of the mine tailings within the cementitious paste. The hydration reactions between the binder, carbonate medium, and water result in the formation of a solid rock product that incorporates the tailings into its structure, reducing the mobility of harmful components and providing environmental benefits.

The process of the presently claimed invention is associated with at least one of the following advantages:

- The inventively claimed process captures carbon dioxide and transforms it into stable carbonate minerals like calcium carbonate ($CaCO_3$), providing long-term sequestration of $CO_2$ for over a thousand years. This prevents its release into the atmosphere, contributing to environmental sustainability by mitigating carbon emissions.
- The Carbonated Tailings Process (CTP) stabilizes mining waste physically and chemically. By incorporating carbonates and binders, the waste becomes more durable and resistant to environmental degradation, reducing leaching of contaminants such as acidic rock drainage (ARD).
- By converting tailings into a stable solid form, this inventively claimed process can reduce or eliminate the need for tailings dams, which often pose environmental hazards.
- The cementitious paste formed from this inventively claimed process offers enhanced mechanical strength due to the incorporation of materials like calcium carbonate and binders such as Portland cement and pozzolanic materials. This results in improved durability and long-term stability of the underground fill material.
- The CTP leverages locally sourced and industrial by-products like fly ash and slag, reducing costs associated with raw material transportation. The use of waste materials further decreases the carbon footprint of the process.
- The system is adaptable to different forms of carbon dioxide and a variety of mine waste compositions, making it scalable for a wide range of mining operations. It can also utilize multiple modes of $CO_2$ transport, including pipelines and trucks, depending on the proximity of the $CO_2$ source.
- The inventively claimed process can utilize $CO_2$ from various industrial sources, including Direct Air Capture (DAC), carbon capture from industrial plants, and bioenergy with carbon capture and storage (BECCS). This adaptability allows for efficient integration with existing industrial $CO_2$ sources, making the inventively claimed process more practical and cost-effective.

In the following, the embodiments of the invention are described in detail. These embodiments outline specific features and aspects of the invention that illustrate the process and its components, providing a more comprehensive understanding of its implementation. Although these embodiments are presented in a form that resembles a claim-like structure, they are intended solely for descriptive purposes and should not be interpreted as the formal claims of the invention.

**Embodiments:**

1. A process for the production of a cementitious paste for backfilling of underground operations, wherein the process comprises at least the steps of

(1) providing carbon dioxide in an alkaline solution to form a medium containing at least one carbonate or providing carbon dioxide in the form of a concentrated carbon dioxide gas, and
(2) mixing (a) at least one binder, (b) mine tailings, (c) the medium containing at least one carbonate of step (1) or the concentrated carbon dioxide gas of step (1), and (d) optionally at least one filler to obtain a cementitious paste.

2. The process according to embodiment 1, wherein the medium containing at least one carbonate is present in the form of a solution or a slurry.

3. The process according to embodiment 2, wherein the solution or slurry has a solid content in the range of $\geq 20$ wt.-% to $\leq 50$ wt.-%, based on the total amount of the solution or slurry.

4. The process according to any one of the preceding embodiments, wherein the alkaline solution has a pH value in the range of $\geq 8.0$ to $\leq 11.0$.

5. The process according to any one of the preceding embodiments, wherein the at least one carbonate is selected from the group consisting of calcium carbonate, magnesium carbonate, manganese carbonate, sodium carbonate, and iron carbonate, preferably the at least one carbonate is calcium carbonate.

6. The process according to any one of the preceding embodiments, wherein the concentrated carbon dioxide gas has a concentration of carbon dioxide in the range of $\geq 90$ wt.-% to $\leq 99$ wt.-%, based on the total volume of the concentrated carbon dioxide gas.

7. The process according to any one of the preceding embodiments, wherein the carbon dioxide is captured by at least one method selected from the group consisting of direct air capture (DAC), carbon capture and storage (CCS), post-combustion capture, pre-combustion capture, oxy-fuel combustion, chemical looping, natural gas processing, fermentation-based capture, and cryogenic distillation to form a concentrated carbon dioxide gas.

8. The process according to any one of the preceding embodiments, wherein the at least one binder is selected from the group consisting of Portland cement, blended cement, pozzolanic materials and geopolymer cement.

9. The process according to embodiment 8, wherein Portland cement comprises a mixture of limestone and clay.

10. The process according to embodiment 8, wherein blended cement comprises a mixture of limestone, clay, and supplementary cementitious materials (SCMs) selected from the group consisting of fly ash, slag and silica fume.

11. The process according to embodiment 8, wherein pozzolanic materials are selected from the group consisting of fly ash, silica fume, calcined oil shale, and volcanic ash, which react with calcium hydroxide.

12. The process according to embodiment 8, wherein geopolymer cement comprises industrial by-products selected from the group consisting of fly ash and slag, which react with alkaline solutions.

13. The process according to any one of the preceding embodiments, wherein the mine tailings contain silica in an amount in the range of $\geq 30$ wt.-% to $\leq 97$ wt.-%, based on the total amount of mine tailings.

14. The process according to any one of the preceding embodiments, wherein the mine tailings have a particle size D50 in the range of $\geq 10$ $\mu$m to $\leq 500$ $\mu$m, determined according to ISO 13320

16. The process according to any one of the preceding embodiments, wherein the mine tailings have a solid content in the range of $\geq 60$ wt.-% to $\leq 90$ wt.-%, based on the total amount of mine tailings.

16. The process according to any one of the preceding embodiments, wherein in step (2) the weight ratio of component (a) to component (b) is in the range of $\geq 1:5$ to $\leq 1:50$.

17. The process according to any one of the preceding embodiments, wherein in step (2) the weight ratio of component (b) to component (c) is in the range of $\geq 3:1$ to $\leq 10:1$.

18. The process according to any one of the preceding embodiments, wherein in step (2) the weight ratio of component (a) to component (c) is in the range of $\geq 1:2$ to $\leq 1:10$.

19. The process according to any one of the preceding embodiments, wherein in step (2) the content of component (a) is in the range of $\geq 2.0$ wt.-% to $\leq 20$ wt.-%, based on the total amount of the mixture.

20. The process according to any one of the preceding embodiments, wherein in step (2) the content of component (b) is in the range of $\geq 60$ wt.-% to $\leq 90$ wt.-%, based on the total amount of the mixture.

21. The process according to any one of the preceding embodiments, wherein in step (2) the content of component (c) is in the range of ≥ 10 wt.-% to ≤ 30 wt.-%, based on the total amount of the mixture.

22. The process according to any one of the preceding embodiments, wherein in step (2) the temperature is maintained in the range of ≥ 10 °C to ≤ 30 °C.

23. The process according to any one of the preceding embodiments, wherein in step (2) the duration of mixing is in the range of ≥ 10 minutes to ≤ 2 hours.

24. The process according to any one of the preceding embodiments, wherein in step (2) the stirring rate is in the range of ≥ 100 rpm to ≤ 1500 rpm.

25. The process according to any one of the preceding embodiments, wherein in step (2) the energy input is in the range of ≥ 0.5 to ≤ 5.0 kWh per kg of the mixture comprising components (a), (b) and (c).

26. The process according to any one of the preceding embodiments, wherein in step (2) the mixing is performed using a high-shear mixer.

27. The process according to any one of the preceding embodiments, wherein the mixing in step (2) is carried out as a batch process or a continuous process.

28. The process according to any one of the preceding embodiments, wherein the at least one filler is selected from the group consisting of silica fume, fly ash, and slag.

29. The process according to any one of the preceding embodiments, wherein the cementitious paste has a slump flow in the range of ≥ 80 mm to ≤ 250 mm, preferably in the range of ≥ 80 mm to ≤ 200 mm, determined according to EN 12350-5.

30. The process according to any one of the preceding embodiments, wherein the cementitious paste has a porosity in the range of ≥ 10 % by volume to ≤ 40 % by volume, preferably in the range of ≥ 15 % by volume to ≤ 35 % by volume.

31. The process according to any one of the preceding embodiments, wherein the cementitious paste has a solid content in the range of ≥ 60 wt.-% to ≤ 90 wt.-%, based on the total amount of cementitious paste.

32. A process for filling the voids of an underground operation comprising the steps of

(11) filling the cementitious paste obtained by the process according to any one of claims 1 to 29 into voids of an underground operation, and
(22) curing the cementitious paste to obtain a solid rock product.

33. The process according to embodiment 32, wherein, after 28 days, the solid rock product has a shrinkage in the range of ≥ 0.05% to ≤ 0.2% by volume.

34. The process according to embodiment 32, wherein, after 28 days, the solid rock product has a compressive strength in the range of 0.5 MPa to 10.0 MPa, determined according to EN 12190.

**Examples**

**1. Methods**

1.1 The **slump flow** is determined according to EN 12350-5.

1.2 The **particle size D50** is determined according to ISO 13320.

1.3 The **porosity** of the cementitious paste is determined using the water displacement method, which is a practical approach for measuring the total porosity of cementitious materials. In this method, a hardened sample of the cementitious paste is first weighed in a dry state to determine its dry mass. The sample is then submerged in water, allowing the pores to become fully saturated. Once fully saturated, the sample is weighed again in water to measure its saturated mass. Finally, the volume of water displaced by the submerged sample is recorded. The porosity is calculated by comparing the volume of water displaced (which corresponds to the total volume of the sample) and the difference between the dry and saturated mass (which represents the pore volume). The equation used for determining the porosity is:

$$\text{Porosity (\%)} = \text{Pore Volume}/\text{Total Volume} \times 100$$

The compressive strength is determined according to EN 12190.

1.4 The **shrinkage** of the solid rock product is determined using the following method:

1. Sample Preparation:

Prepare a fresh batch of the cementitious paste according to the required formulation.

Cast the paste into prismatic molds with known dimensions, typically 100 mm $\times$ 100 mm $\times$ 300 mm (or as specified by the applicable standard, such as ASTM C157 or EN 12617-4).

Ensure that the surface of the paste is smooth and properly finished to avoid irregularities in measurements.

2. Initial Measurements:

After casting, immediately measure the initial length of the paste sample using a precision caliper or length comparator. Record the initial length ($L_0$) of each sample.

Mark the gauge points at the ends of the sample where measurements will be taken. These should be at least 250 mm apart for accuracy.

3. Curing Period:
Place the sample in a controlled curing environment:

Temperature: Maintain at 20 $\pm$ 2°C.

Humidity: Maintain at 95% relative humidity or as per specified conditions.

Allow the sample to cure for a defined period, typically 7, 28, or 56 days, depending on the desired monitoring timeframe. For accurate shrinkage assessment, longer curing periods may be used.

4. Final Measurements:

After the curing period, measure the final length ($L_1$) of the sample at the same gauge points using a precision caliper or comparator.

Ensure that the sample is measured under the same conditions as during the initial measurement (i.e., same environment and temperature to avoid distortion of results).

5. Calculation of Shrinkage:

Calculate the linear shrinkage using the following formula:

$$\text{Shrinkage (\%)} = L_0 - L_1/L_0 \times 100$$

$L_0$ = Initial length of the sample (before curing).

$L_1$ = Final length of the sample (after curing).

6. Reporting:
Report the shrinkage as a percentage (%), indicating the time frame over which the shrinkage was measured (e.g., 28-day shrinkage).

**2.1 Example for Step (1)** - **Preparation of medium containing at least one carbonate**

Carbon dioxide is delivered to the mine and stored in an intermediate container located at the surface, near the paste plant or the unit responsible for preparing the mixture of water and binder (referred to collectively as the "paste plant"). Gaseous $CO_2$ is not introduced directly into the mine due to its higher density compared to air, which poses a suffocation risk. Instead, the $CO_2$ is bubbled through a slightly alkaline process water. Additives that facilitate the precipitation of carbonates are introduced into the water, either in the form of a powder or as a dewatered filter cake. The dewatered filter cake contains 5-40 wt.-% quicklime (CaO), with the remaining portion comprising calcium carbonate ($CaCO_3$). The mixture is continuously stirred, and all relevant control parameters are monitored in real time. The resulting carbonate slurry, with a solids content of 40 wt.-% and a pH value of 9.2, is subsequently pumped to the paste plant, where it contributes to the formation of the cementitious paste.

**2.2.1 Example 2a for Step (2)** - **Preparation of a Cementitious Paste**

In this example, the cementitious paste is prepared by mixing component (a) at least one binder, component (b) mine tailings, and component (c) the medium containing at least one carbonate, in addition to water as needed. The process is carried out as a batch process under controlled conditions.

Components:

Component (a): The binder is Ordinary Portland Cement (OPC) mixed with granulated blast furnace slag (GGBFS), with a composition of 30 wt.-% Portland cement and 70 wt.-% GGBFS. The total content of binder in the mixture is 6 wt.-%, based on the total amount of the mixture.

Component (b): Mine tailings, consisting of 50 wt.-% quartz, 38.8 wt.-% phyllosilicates (including lizardite, kaolinite, talc, biotite/muscovite, and chlorite), 8.5 wt.-% other silicates (anorthite and actinolite), 2.5 wt.-% magnetite, and 0.2 wt.-% gypsum. The total content of mine tailings is 75 wt.-%, based on the total amount of the mixture. The particle size D50 of the mine tailings is set at 200 $\mu$m, determined according to ISO 13320. The solid content of the mine tailings is 75 wt.-%, based on the total amount of the mixture.

Component (c): The medium containing calcium carbonate ($CaCO_3$) is prepared as a slurry with 40 wt.-% solid content. The medium containing calcium carbonate constitutes 19 wt.-% of the total amount of the mixture.

Water: Adjusted as needed to achieve a final solid content of 80 wt.-% in the cementitious paste.

Mixing Conditions:

Temperature: The temperature during mixing is maintained at 20°C.

Duration of Mixing: The total mixing time is 30 minutes.

Stirring Rate: The stirring rate is set to 600 rpm.

Energy Input: The energy input for the process is controlled at 2.5 kWh per kg of the mixture.

Type of Mixer: A twin-shaft paddle mixer is used for the batch process.

The mixture has a pH value of 12.5.

Process Type: The mixing is carried out as a batch process.

Final Cementitious Paste Properties:

Viscosity: The resulting cementitious paste has a slump flow in the range of 130 mm, determined according to EN 12350-5

Porosity: The porosity of the cementitious paste is measured at 25% by volume.

Solid Content: The final solid content of the cementitious paste is 80 wt.-%.

### 2.2.2 Example 2b for Step (2) - Preparation of a Cementitious Paste

In this example, the cementitious paste is prepared by mixing component (a) calcined oil shale activated with calcium hydroxide (instead of Portland cement and GGBFS as in Example 2a), component (b) mine tailings, and component (c) the medium containing at least one carbonate, in addition to water as needed. The process is carried out as a batch process under controlled conditions.

Components:

Component (a): The binder is calcined oil shale activated with calcium hydroxide. The binder content in the mixture is 6 wt.-%, based on the total amount of the mixture.

Component (b): Mine tailings, consisting of: 50 wt.-% quartz, 38.8 wt.-% phyllosilicates (including lizardite, kaolinite, talc, biotite/muscovite, and chlorite), 8.5 wt.-% other silicates (anorthite and actinolite),2.5 wt.-% magnetite, and 0.2 wt.-% gypsum. The total content of mine tailings is 75 wt.-%, based on the total amount of the mixture. The particle size D50 of the mine tailings is set at 200 $\mu$m, determined according to ISO 13320. The solid content of the mine tailings is 75 wt.-%, based on the total amount of the mixture.

Component (c): The medium containing calcium carbonate ($CaCO_3$) is prepared as a slurry with 40 wt.-% solid content. The medium containing calcium carbonate constitutes 19 wt.-% of the total amount of the mixture.

Water: Adjusted as needed to achieve a final solid content of 80 wt.-% in the cementitious paste.

Mixing Conditions:

Temperature: The temperature during mixing is maintained at 20°C.

Duration of Mixing: The total mixing time is 30 minutes.

Stirring Rate: The stirring rate is set to 600 rpm.

Energy Input: The energy input for the process is controlled at 2.5 kWh per kg of the mixture.

Type of Mixer: A twin-shaft paddle mixer is used for the batch process.

The mixture has a pH value of 12.5.

Process Type:

The mixing is carried out as a batch process.
Final Cementitious paste Properties:

Viscosity: The resulting cementitious paste has a slump flow in the range of 140 mm, determined according to EN 12350-5.

Porosity: The porosity of the cementitious paste is measured at 26% by volume.

Solid Content: The final solid content of the cementitious paste is 80 wt.-%.

**2.3 Example for Steps 11 and 22: Filling and Curing Cementitious Paste in an Underground Void**

The cementitious paste of example 2b, consisting of mine tailings, binder, and a carbonate medium, is prepared in a slurry form with a solid content of 80 wt.-% and a slump flow of 140 mm, as determined according to EN 12350-5. The paste is pumped through a series of pipelines into a void left by previous mining operations. The paste is gravity-fed or pumped, depending on the depth and geometry of the underground void, ensuring even distribution across the void space without clogging or segregation. Once the cementitious paste is placed in the void, it begins to cure through a hydration mechanism involving the binder (calcined oil shale activated with calcium hydroxide). Over the course of several weeks, the paste solidifies into a stable rock-like structure. After curing, the solid rock product exhibits a shrinkage of 0.1% by volume after 28 days, ensuring minimal dimensional changes during the curing process. This low shrinkage helps prevent cracking and maintains the integrity of the filled void, providing strong structural support. The solidified cementitious paste achieves a compressive strength of 5 MPa, as determined according to EN 12190, after 28 days.

**Claims**

1.    A process for the production of a cementitious paste for backfilling of underground operations, wherein the process comprises at least the steps of

(1) providing carbon dioxide in an alkaline solution to form a medium containing at least one carbonate or providing carbon dioxide in the form of a concentrated carbon dioxide gas, and
(2) mixing (a) at least one binder, (b) mine tailings, (c) the medium containing at least one carbonate of step (1) or the concentrated carbon dioxide gas of step (1), and (d) optionally at least one filler to obtain a cementitious paste.

2.    The process according to claim 1, wherein the medium containing at least one carbonate is present in the form of a solution or a slurry.

3.    The process according to claim 2, wherein the solution or slurry has a solid content in the range of $\geq 20$ wt.-% to $\leq 50$ wt.-%, based on the total amount of the solution or slurry.

4.    The process according to any one of the preceding claims, wherein the alkaline solution has a pH value in the range of $\geq 8.0$ to $\leq 11.0$.

5.    The process according to any one of the preceding claims, wherein the at least one carbonate is selected from the group consisting of calcium carbonate, magnesium carbonate, manganese carbonate, sodium carbonate, and iron carbonate, preferably the at least one carbonate is calcium carbonate.

6.    The process according to any one of the preceding claims, wherein the concentrated carbon dioxide gas has a concentration of carbon dioxide in the range of $\geq 90$ wt.-% to $\leq 99$ wt.-%, based on the total volume of the concentrated carbon dioxide gas.

7.    The process according to any one of the preceding claims, wherein the carbon dioxide is captured by at least one method selected from the group consisting of direct air capture (DAC), carbon capture and storage (CCS), post-combustion capture, pre-combustion capture, oxy-fuel combustion, chemical looping, natural gas processing, fermentation-based capture, and cryogenic distillation to form a concentrated carbon dioxide gas.

8.    The process according to any one of the preceding claims, wherein the at least one binder is selected from the group consisting of Portland cement, blended cement, pozzolanic materials and geopolymer cement.

9.    The process according to any one of the preceding claims, wherein the mine tailings have a solid content in the range of $\geq 60$ wt.-% to $\leq 90$ wt.-%, based on the total amount of mine tailings.

**10.** The process according to any one of the preceding claims, wherein in step (2)

(a) the at least one binder is present in an amount of $\geq 4.0$ wt.-% to $\leq 20.0$ wt.-%, based on the total amount of the mixture,
(b) the mine tailings are present in an amount of $\geq 60$ wt.-% to $\leq 90$ wt.-%, based on the total amount of the mixture, and
(c) the medium containing at least one carbonate of step (1) is present in an amount of $\geq 10$ wt.-% to $\leq 30$ wt.-%, based on the total amount of the mixture.

**11.** The process according to any one of the preceding claims, wherein the cementitious paste has a slump flow in the range of $\geq 80$ mm to $\leq 250$ mm, preferably in the range of $\geq 80$ mm to $\leq 200$ mm, determined according to EN 12350-5.

**12.** The process according to any one of the preceding claims, wherein the cementitious paste has a porosity in the range of $\geq 10$ % by volume to $\leq 40$ % by volume, preferably in the range of $\geq 15$ % by volume to $\leq 35$ % by volume.

**13.** The process according to any one of the preceding claims, wherein the cementitious paste has a solid content in the range of $\geq 60$ wt.-% to $\leq 90$ wt.-%, based on the total amount of cementitious paste.

**14.** The process according to any one of the preceding claims, wherein the mixing in step (2) is carried out at a pH value in the range of $\geq 12.0$ to $\leq 13.0$.

**15.** A process for filling the voids of an underground operation comprising the steps of

(11) filling the cementitious paste obtained by the process according to any one of claims 1 to 14 into voids of an underground operation, and
(22) curing the cementitious paste to obtain a solid rock product.

| | Europäisches Patentamt European Patent Office Office européen des brevets | **EUROPEAN SEARCH REPORT** | **Application Number** EP 24 21 9087 |
|---|---|---|---|

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | CN 119 015 859 A (UNIV CHONGQING) 26 November 2024 (2024-11-26) | 1,6 | INV. C04B28/02 |
| A | * claims 1,5,10 * * paragraph [0099] * | 9-13 | C04B28/08 C04B18/12 C04B22/10 |
| X | US 2022/017419 A1 (GUYNN JOHN M [US]) 20 January 2022 (2022-01-20) | 1,2,4,5, 8,14 | C04B7/02 |
| Y | * claims 1,6,7,10,11,15 * | 3,7 | |
| A | * paragraph [0031] * | 9-13 | |
| X | CN 115 355 047 A (CHANGSHA SOCIAL WORK COLLEGE) 18 November 2022 (2022-11-18) | 1,15 | |
| A | * claims 1,3 * * example 1 * | 9-13 | |
| Y | US 2012/211421 A1 (SELF KYLE [US] ET AL) 23 August 2012 (2012-08-23) | 3,7 | |
| A | * claims 1,2,17 * * paragraphs [0009], [0088], [0253] * | 9-13 | |

| | |
|---|---|
| TECHNICAL FIELDS SEARCHED (IPC) | |
| C04B | |

The present search report has been drawn up for all claims

| Place of search | Date of completion of the search | Examiner |
|---|---|---|
| The Hague | 27 May 2025 | Zammit, Madalena |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

# ANNEX TO THE EUROPEAN SEARCH REPORT
## ON EUROPEAN PATENT APPLICATION NO.

EP 24 21 9087

This annex lists the patent family members relating to the patent documents cited in the above-mentioned European search report.
The members are as contained in the European Patent Office EDP file on
The European Patent Office is in no way liable for these particulars which are merely given for the purpose of information.

27-05-2025

| Patent document cited in search report | | Publication date | Patent family member(s) | Publication date |
|---|---|---|---|---|
| CN 119015859 | A | 26-11-2024 | NONE | |
| US 2022017419 | A1 | 20-01-2022 | NONE | |
| CN 115355047 | A | 18-11-2022 | NONE | |
| US 2012211421 | A1 | 23-08-2012 | NONE | |

EPO FORM P0459

For more details about this annex : see Official Journal of the European Patent Office, No. 12/82